# EUROPEAN PATENT SPECIFICATION

(11) **EP 2 107 693 B1**
(45) Date of publication and mention of the grant of the patent: **17.10.2012**
(21) Application number: 08006718.4
(22) Date of filing: 02.04.2008
(51) Int. Cl.: H04B 3/46, H04B 3/04, H04L 5/02, H04L 27/26

(54) **METHOD AND DEVICE FOR SNR MEASUREMENT AND COMMUNICATION SYSTEM COMPRISING SUCH DEVICE**
VERFAHREN UND VORRICHTUNG ZUR SNR-MESSUNG UND KOMMUNIKATIONSSYSTEM MIT EINER DERARTIGEN VORRICHTUNG
PROCÉDÉ ET DISPOSITIF DE MESURE SNR ET SYSTÈME DE COMMUNICATION COMPRENANT UN TEL DISPOSITIF

(43) Date of publication of application: 07.10.2009
(73) Proprietor: Nokia Siemens Networks Oy, 02610 Espoo (FI)
(72) Inventor: Kuipers, Martin, 14624 Dallgow-Döberitz (DE); Schnitter, Matthias, 80689 München (DE)
(74) Representative: Bruglachner, Thomas E.

(56) References cited:
- WO-A-2007/031025
- US-A- 5 991 311
- US-B1- 6 990 059

## Description

The invention relates to a method and to a device for SNR measurement and to a communication system comprising such a device.

Existing Digital Subscriber Line (DSL) technologies (e.g., ADSL2plus, VDSL2) are limited in terms of data rate and reach. Limiting factors are in particular crosstalk and noise induced on the line.

An alternative transmission method is used with DSL systems that relies on a non-stationary transmission of data. An example for such non-stationary transmission is a burst transmission comprising idle times between said bursts. Such a transmission is non-stationary in a sense that the transmission itself is not continuous, instead it comprises bursts of transmission and time periods of no transmission between such bursts.

In ADSL2 and ADSL2plus a so-called "L2 mode" is known as a power-saving mechanism. A line which operates in L2 mode, transmits data with reduced power. However, the L2 mode bears particular disadvantages, e.g., it increases a susceptibility of neighboring lines to crosstalk. When a first line switches to L2 mode, it generates less crosstalk on neighboring second lines. As a consequence, neighboring second lines may adapt their transmission parameters to this reduced crosstalk. When the first line switches back from L2 mode into full power transmission mode, neighboring second lines experience an increased crosstalk caused by the first line and thus need to adapt their transmission parameters. Such adaptation requires some time and, in many cases, cannot be performed fast enough to compensate the increased crosstalk. Hence, such sudden increase of crosstalk caused by the first line results in severe degradation of a transmission quality on said second lines. In some cases, the second lines may even need retraining. Thus, said L2 mode is widely unused.

US 5.991.311 discloses a digital subscriber-line system for high speed data transmission in time compression multiplexing-integrated services digital network. The DSL system has a central-office-side device with a data network interface to a data network. A burst-clock input receives a burst clock that indicates the downstream time-window when the ISDN devices at the central office side are transmitting from the central office side to the remote sites. It also indicates the upstream time-window when the ISDN devices at the central office side are receiving remotely-transmitted data from the remote sites.

However, there is an ongoing discussion as how to save energy when transmitting data over the fixed line, in particular to avoid high power consumption especially when a minor amount of data traffic is conveyed over a digital subscriber line.

The **problem** to be solved is to overcome the disadvantages stated above and in particular to provide an efficient approach that enables a reduced power consumption.

This problem is solved according to the features of the independent claims. Further embodiments result from the depending claims.

In order to overcome this problem, a method for SNR measurement is provided according to claim 1.

Hence, this approach allows to efficiently determine a worst case crosstalk and/or interference scenario during such bursts. As the bursts result in significant (in particular maximum) crosstalk, the adjustment of the lines based on such crosstalk and/or interference results in a stable system during normal operation. In addition, burst transmission can be efficiently used over digital subscriber lines according to the solution suggested herein. This may lead to a significant reduction of transmission power, in particular during time periods of minor traffic load.

It is noted that said SNR measurement refers to any kind of measurement that determines a disturbance over a channel, line or connection.

According to an embodiment, the SNR measurement is corrected based on at least one additional SNR measurement value.

Hence, one SNR measurement value may be considered defective if it differs by more than a given threshold from at least one further measurement value. Such at least one further measurement value may be at least one adjacent SNR measurement value (in the time domain, at least one preceding SNR measurement value; also, in the frequency domain, at least one SNR measurement value of at least one adjacent or neighboring sub-carrier). A correction of said defective SNR value can be achieved, e.g., by means of interpolation regarding, e.g., its previous SNR measurement value(s) and/or its adjacent or neighboring SNR measurement value(s).

It is also an embodiment that said additional SNR measurement value comprises at least one chronologically adjacent and/or locally adjacent SNR measurement value. The SNR measurement may in particular be corrected based on (means of) interpolation and/or correlation.

According to an embodiment, the device is a communication device, in particular a DSL transmitter and/or a DSL receiver.

It is also an embodiment that said device is or is associated with a customer premises equipment and/or with a central office.

Said central office in particular relates to and/or comprises any kind of DSLAM and/or line card functionality.

The problem stated supra is further solved by a communication system comprising the device as described herein.

Embodiments of the invention are shown and illustrated in the following figures:
- Fig.1: shows a communication channel between a DSL transmitter and a DSL receiver, wherein at a given rate bursts are conveyed from the DSL transmitter to the DSL receiver;
- Fig.2: shows measured SNR values for a number of subcarriers, which are corrected based on a chronological context or based on a local context.

A transmitter conveys a burst (referred to also as synchronization burst or "sync burst") comprising sub-carriers or tones (in particular all frequency bands) to be used for communication purposes. Such burst is transmitted at a substantially constant time interval, e.g., every T seconds.

The duration between the bursts can be utilized for transmitting further bursts and/or other non-stationary signals. In particular, such signals may comprise no signal at all (e.g., silence on the line).

Receivers of lines adjacent to the line that conveys the actual burst may measure a signal-to-noise ratio (SNR) on several or in particular on all sub-carriers during each such burst. Hence, the receivers become aware of the crosstalk to their respective own line induced by a burst conveyed over a different line.

Each receiver may further improve an accuracy of the SNR measurements by evaluating a correlation between measured SNR values of sub-carriers and measured values of adjacent or neighboring sub-carriers (or tones) in order to determine, e.g., a mean value. This may significantly reduce a variance in evaluating said SNR and hence allow the measurements to become more accurate.

One particular advantage of the concept provided is that the SNR measurement may be determined for all used sub-carriers during the same measurement step. Hence, frequency-domain interpolation between measured SNR values is not required at the receiver. Hence, processing of measured SNR values requires less computational effort.

Advantageously, this concept can be well combined with a non-stationary transmission concept, utilizing particular bursts.

A further advantage of this approach is that it allows utilizing non-stationary transmission modes to operate in frequency bands already occupied by legacy DSL systems. The approach may be introduced into existing DSL systems by firmware modifications only and thus it can be applied to existing installations or deployments.

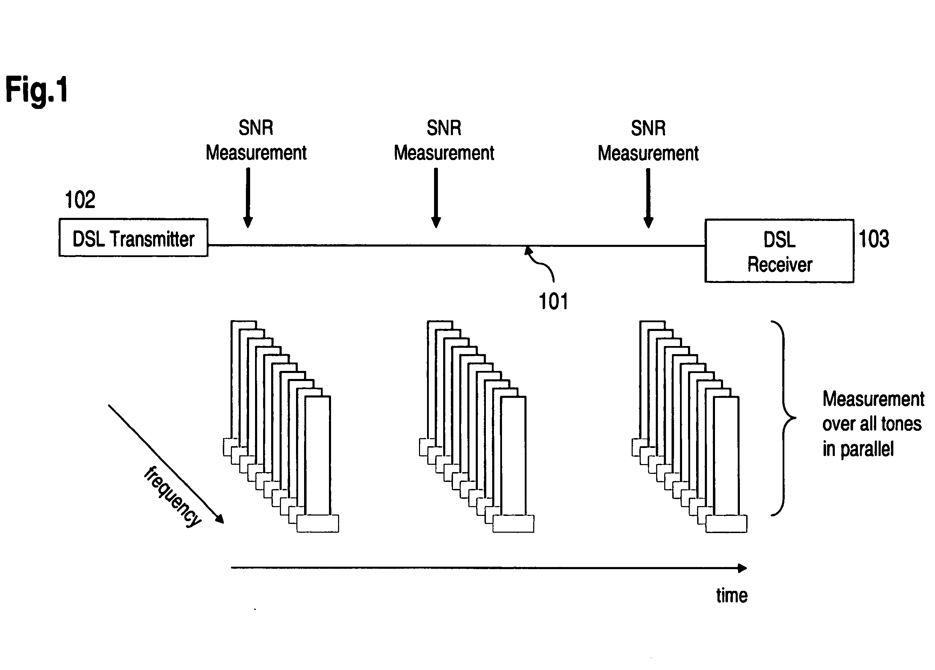

**Fig.1** shows a communication channel 101 between a DSL transmitter 102 and a DSL receiver 103. Such channel 101 (or DSL line) is disturbed via crosstalk induced from at least one other line (not shown). This at least one other line conveys bursts that interfere with the channel 101.

The same may apply in an analogue manner to the channel 101 conveying bursts from the DSL transmitter to the DSL receiver 103, wherein said bursts may cause crosstalk to at least one other line (not shown).

At a given rate (i.e. separated from one another by a time period T), crosstalk bursts of another line affect the channel 101 and can be utilized for SNR measurement purposes.

As a burst may comprise several tones or (sub-)carriers in parallel, the DSL receiver 103 is enabled to process the SNR measurement for a worst-case crosstalk situation.

The DSL receiver 103 may then report to the DSL transmitter 102 its SNR measurement values and the DSL transmitter 102 may thereupon adjust its transmission power.

Advantageously, such scenario can be efficiently used for burst transmission purposes. During the burst transmission, the worst-case crosstalk is known and the adaptation of the line according to SNR measurement values as determined allows to cope with the physical interference and crosstalk characteristics of the line(s).

It is noted that DSL refers to all present and upcoming technologies utilizing any kind of digital subscriber line technology, e.g., ADSL, VDSL, etc.

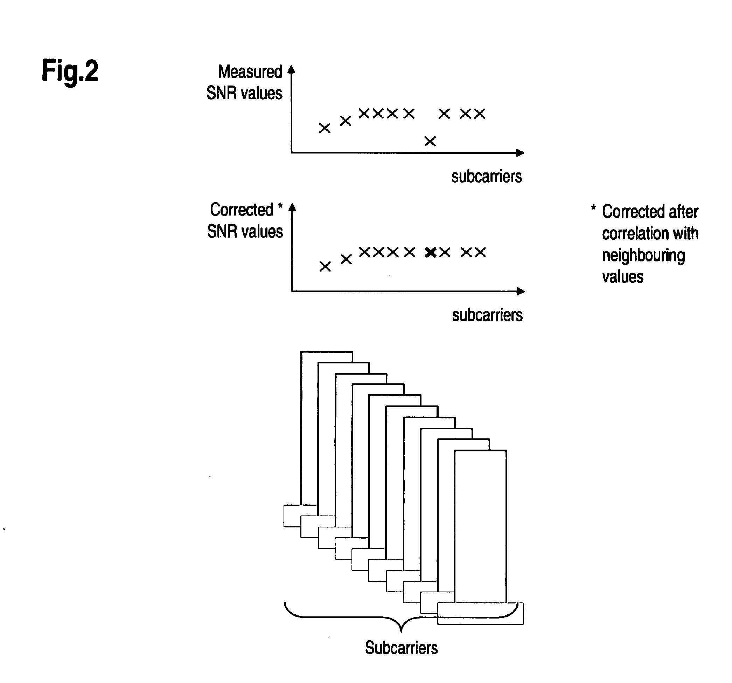

**Fig.2** shows measured SNR values for a number of sub-carriers. If, e.g., an SNR measurement value for one sub-carrier is significantly lower (or higher) than SNR measurement values for at least one adjacent sub-carrier, such SNR measurement value may be corrected by means of correlation and/or interpolation. However, there are several possibilities to determine whether at least one SNR measurement value is considered to be wrong and also several possibilities as how to correct such wrong value(s).

For example, a wrong SNR measurement value may be determined by exceeding a predetermined threshold for a difference between at least one adjacent and/or at least one previous SNR measurement value. It is in particular possible to not consider neighboring values, but only previous SNR measurement values for this particular sub-carrier.

If such SNR measurement value is considered wrong and needs to be adjusted, this can be done by means of interpolation regarding this particular value's previous at least one SNR measurement value and/or at least one of the adjacent SNR measurement values (regarding a chronological context and/or a local context).

### Synchronization:

Various transmitters that are deployed or associated with different central offices (COs) or shelters or DSLAMs (within the same CO or between various COs) or line cards within a particular DSLAM may have to be synchronized with one another in order to ensure that bursts are transmitted at substantially the same time.

The synchronization could be provided for the receivers listening to crosstalk caused by said bursts on adjacent lines. The bursts may comprise a particular data pattern to be recognized via crosstalk and used for synchronization purposes by an adjacent line.

Hence, receivers within the CO (or a cabinet, a DSLAM or a line card, etc.) may listen for crosstalk in downstream frequency bands. Accordingly, receivers deployed with the customer premises equipment (CPE) may listen to crosstalk in downstream frequency bands and convey the synchronization information received (back) to the transmitter (that may, e.g., be located in the CO). Hence, CPEs can be synchronized by the CO via synchronized downstream transmission.

The synchronization concept described is applicable to upstream transmission accordingly.

The proposed synchronization concept does not need external equipment or additional software to be run with the CO. It may just require an upgrade for the DSL transceivers. Such modification may be provided together with an implementation of the new mode of transmission. Hence, such enhancement of the physical layer may only require modifications of such physical layer, but it does not require any further changes to upper layers, in particular to portions of the system outside the DSL transmission (i.e., the line together with DSL transceivers at both ends).

### Abbreviations:

- ADSL: Asymmetric Digital Subscriber Line
- CO: Central Office
- CPE: Customer Premises Equipment
- DMT: Discrete Multi Tone
- DSL: Digital Subscriber Line
- DSLAM: DSL Access Multiplexer
- SNR: Signal to Noise Ratio
- VDSL2: Very high speed Digital Subscriber Line 2

## Claims

1. A method for SNR measurement, wherein
at least one DSL transmitter transmits bursts to at least one first DSL receiver, the bursts being fed via at least one first digital subscriber line and each of said bursh comprising several sub-carriers or tones, and
a second DSL receiver performs an SNR measurement on at least one second digital subscriber line during said bursts,
**characterized in that** the result of the SNR measurement is provided to the DSL transmitter and the DSL transmitter adjusts a transmission power based on the SNR measurement.

2. The method according to claim 1, wherein the at least one first DSL transmitter is or is associated with a central office or a digital subscriber line access multiplexer.

3. The method according to claim 1 or 2, wherein the at least one first DSL receiver and/or the second DSL receiver is or is associated with at least one customer premises equipment.

4. The method according to any of the preceding claims,
wherein the transmission power is adjusted by adjusting a signal strength for data to be conveyed.

5. The method according to any of the preceding claims,
wherein the SNR measurement is corrected based on at least one additional SNR measurement value.

6. The method according to claim 5, wherein said additional SNR measurement value comprises at least one chronologically adjacent and/or locally adjacent SNR measurement value.

7. The method according to any of claims 5 or 6, wherein the SNR measurement is corrected based on interpolation and/or correlation.

8. The method according to any of the preceding claims,
wherein the at least one DSL transmitter and/or the second DSL receiver is synchronized based on a data pattern conveyed via an adjacent line.

9. The method according to claim 8, wherein said data pattern is conveyed via crosstalk.

10. A DSL transmitter comprising transmitting means that are arranged such that bursts are transmitted to at least one DSL receiver, each of the bursts being fed via at least one first digital subscriber line and comprising several sub-carriers or tones, and adjusting means that are arranged such that a transmission power is adjusted based on an SNR measurement received from a second DSL receiver, the SNR measurement being performed by said second DSL receiver on at least one second digital subscriber line during said bursts and provided to the DSL transmitter.

11. A DSL receiver comprising SNR measurement means that are arranged such that an SNR measurement can be performed on at least one second digital subscriber line during bursts that are transmitted by at least one first DSL transmitter to at least one other DSL receiver, the bursts being fed via at least one first digital subscriber line and comprising several sub-carriers or tones, and means that are arranged such that the result of the SNR measurement is provided to the DSL transmitter for adjusting a transmission power based on the SNR measurement.

12. A communication system comprising
a transmitter according to claim 10 and a receiver according to claim 11.

## Patentansprüche

1. Verfahren für die SNR-Messung, wobei
wenigstens ein DSL-Sender Bursts an wenigstens einen ersten DSL-Empfänger sendet, wobei die Bursts über wenigstens eine erste digitale Teilnehmerleitung eingespeist werden und jeder der Bursts mehrere Unterträger oder Töne umfasst, und
ein zweiter DSL-Empfänger während der Bursts eine SNR-Messung an wenigstens einer zweiten digitalen Teilnehmerleitung ausführt,
**dadurch gekennzeichnet, dass** das Ergebnis der SNR-Messung dem DSL-Sender bereitgestellt wird und der DSL-Sender eine Sendeleistung basierend auf der SNR-Messung einstellt.

2. Verfahren nach Anspruch 1, wobei der wenigstens eine erste DSL-Sender eine Vermittlungsstelle ist oder einer Vermittlungsstelle zugeordnet ist oder ein Zugriffsmultiplexer für digitale Teilnehmerleitungen ist oder einem Zugriffsmultiplexer für digitale Teilnehmerleitungen zugeordnet ist.

3. Verfahren nach Anspruch 1 oder 2, wobei der wenigstens eine erste DSL-Sender und/oder der zweite DSL-Empfänger wenigstens ein Endgerät in den Räumlichkeiten eines Teilnehmers ist oder wenigstens einem Endgerät in den Räumlichkeiten eines Teilnehmers zugeordnet ist.

4. Verfahren nach einem der vorhergehenden Ansprüche, wobei die Sendeleistung durch das Einstellen einer Signalstärke für die zu befördernden Daten eingestellt wird.

5. Verfahren nach einem der vorhergehenden Ansprüche, wobei die SNR-Messung basierend auf wenigstens einem zusätzlichen SNR-Messwert korrigiert wird.

6. Verfahren nach Anspruch 5, wobei der zusätzliche SNR-Messwert wenigstens einen chronologisch benachbarten und/oder logisch benachbarten SNR-Messwert umfasst.

7. Verfahren nach einem der Ansprüche 5 oder 6, wobei die SNR-Messung basierend auf einer Interpolation und/oder einer Korrelation korrigiert wird.

8. Verfahren nach einem der vorhergehenden Ansprüche, wobei der wenigstens eine DSL-Sender und/oder der zweite DSL-Empfänger basierend auf einem über eine benachbarte Leitung beförderten Datenmuster synchronisiert wird.

9. Verfahren nach Anspruch 8, wobei das Datenmuster über Nebensprechen befördert wird.

10. DSL-Sender, der Sendemittel, die so ausgelegt sind, dass Bursts an wenigstens einen DSL-Empfänger gesendet werden, wobei jeder der Bursts über wenigstens eine erste digitale Teilnehmerleitung eingespeist wird und mehrere Unterträger oder Töne umfasst, und Einstellmittel, die so ausgelegt sind, dass eine Sendeleistung basierend auf einer von einem zweiten DSL-Empfänger empfangenen SNR-Messung eingestellt wird, umfasst, wobei die SNR-Messung durch den zweiten DSL-Empfänger an wenigstens einer zweiten digitalen Teilnehmerleitung während der Bursts ausgeführt und dem DSL-Sender bereitgestellt wird.

11. DSL-Empfänger, der SNR-Messmittel, die so ausgelegt sind, dass eine SNR-Messung an wenigstens einer zweiten digitalen Teilnehmerleitung während Bursts ausgeführt werden kann, die durch wenigstens einen ersten DSL-Sender an wenigstens einen weiteren DSL-Empfänger gesendet werden, wobei die Bursts über wenigstens eine erste digitale Teilnehmerleitung eingespeist werden und mehrere Unterträger oder Töne umfassen, und Mittel, die so ausgelegt sind, dass das Ergebnis der SNR-Messung dem DSL-Sender zum Einstellen einer Sendeleistung basierend auf der SNR-Messung bereitgestellt wird, umfasst.

12. Kommunikationssystem, das einen Sender nach Anspruch 10 und einen Empfänger nach Anspruch 11 umfasst.

## Revendications

1. Un procédé de mesure SNR, dans lequel
au moins un émetteur DSL transmet des rafales à au moins un premier récepteur DSL, les rafales étant acheminées par l'intermédiaire d'au moins une première ligne d'abonné numérique et chacune desdites rafales comprenant plusieurs sous-porteuses ou tonalités, et
un deuxième récepteur DSL exécute une mesure SNR sur au moins une deuxième ligne d'abonné numérique au cours desdites rafales,
**caractérisé en ce que** le résultat de la mesure SNR est fourni à l'émetteur DSL et l'émetteur DSL règle une puissance d'émission en fonction de la mesure SNR.

2. Le procédé selon la revendication 1, dans lequel le au moins un premier émetteur DSL est ou est associé à un central téléphonique ou un multiplexeur d'accès de ligne d'abonné numérique.

3. Le procédé selon la revendication 1 ou 2, dans lequel le au moins un premier récepteur DSL et/ou le deuxième récepteur DSL est ou est associé à au moins un équipement de locaux d'abonné.

4. Le procédé selon l'une quelconque des revendications précédentes, dans lequel la puissance d'émission est réglée par le réglage d'une puissance de signal pour des données à acheminer.

5. Le procédé selon l'une quelconque des revendications précédentes, dans lequel la mesure SNR est corrigée en fonction d'au moins une valeur de mesure SNR additionnelle.

6. Le procédé selon la revendication 5, dans lequel ladite valeur de mesure SNR additionnelle comprend au moins une valeur de mesure SNR chronologiquement adjacente et/ou localement adjacente.

7. Le procédé selon l'une quelconque des revendications 5 ou 6, dans lequel la mesure SNR est corrigée en fonction d'au moins un facteur parmi interpolation et/ou corrélation.

8. Le procédé selon l'une quelconque des revendications précédentes, dans lequel le au moins un émetteur DSL et/ou le deuxième récepteur DSL est synchronisé en fonction d'un modèle de données transporté par l'intermédiaire d'une ligne adjacente.

9. Le procédé selon la revendication 8, dans lequel ledit modèle de données est transporté par l'intermédiaire de diaphonie.

10. Un émetteur DSL comprenant un moyen d'émission qui est agencé de sorte que des rafales soient transmises à un au moins un récepteur DSL, chacune des rafales étant acheminée par l'intermédiaire d'au moins une première ligne d'abonné numérique et comprenant plusieurs sous-porteuses ou tons, et un moyen de réglage qui est agencé de sorte qu'une puissance d'émission soir réglée en fonction d'une mesure SNR reçue à partir d'un deuxième récepteur DSL, la mesure SNR étant exécutée par ledit deuxième récepteur DSL sur au moins une deuxième ligne d'abonné numérique au cours desdites rafales et fournie à l'émetteur DSL.

11. Un récepteur DSL comprenant un moyen de mesure SNR qui est agencé de sorte qu'une mesure SNR puisse être exécutée sur au moins une deuxième ligne d'abonné numérique au cours de rafales qui sont transmises par au moins un premier émetteur DSL vers au moins un autre émetteur DSL, les rafales étant acheminées par l'intermédiaire d'au moins une première ligne d'abonné numérique et comprenant plusieurs sous-porteuses ou tons, et un moyen qui est agencé de sorte que le résultat de la mesure soit fourni à l'émetteur DSL pour un réglage d'une puissance d'émission en fonction de la mesure SNR.

12. Un système de communication comprenant un émetteur selon la revendication 10 et un récepteur selon la revendication 11.
